# EUROPÄISCHE PATENTSCHRIFT

(11) **EP 0 439 432 B1**
(45) Veröffentlichungstag und Bekanntmachung des Hinweises auf die Patenterteilung: **10.11.1993**
(21) Anmeldenummer: 91810045.4
(22) Anmeldetag: 21.01.1991
(51) Int. Cl.: B60R 13/08, F16L 59/02, F01N 7/14, F02B 77/00

(54) **Schallabsorbierender Hitzeschild**
Sound absorbing heat shield
Bouclier thermique absorbant le son

(30) Priorität: 21.01.1990 CH 188/90
(43) Veröffentlichungstag der Anmeldung: 31.07.1991
(73) Patentinhaber: MATEC HOLDING AG, CH-8700 Küsnacht (CH)
(72) Erfinder: Müller, Peter, Dr., W-6107 Reinheim (DE); Ghéczy, Ivan, CH-9475 Sevelen (CH)
(74) Vertreter: Seifert, Helmut E.

(56) Entgegenhaltungen:
- DE-A- 3 821 468
- DE-B- 1 180 155
- FR-A- 2 482 643
- US-A- 4 369 744

## Beschreibung

Die vorliegende Erfindung betrifft einen schallabsorbierenden Hitzeschild mit einer perforierten Trägerschicht, auf welcher eine schallabsorbierende Wärmedämmschicht befestigt ist, welche Wärmedämmschicht beidseitig mit einem Schutzbelag versehen ist (siehe z.B. DE-A-3 821 468).

Solche Hitzeschilde werden unter anderem in der Automobilindustrie verwendet, um beispielsweise das Tunnelinnere im Bodenteil eines Fahrzeugs zu verkleiden. Solchen Verkleidungen kommt heute eine grosse Bedeutung zu, da einerseits bei der heute üblichen Verwendung von Katalysatoren die Temperatur der Abgase und damit auch die Temperatur der Auspuffrohre stark erhöht ist und andererseits die Grenzwerte für den Geräuschpegel eines Fahrzeuges immer tiefer gesetzt werden müssen. So sehen beispielsweise die Richtlinien der Europäischen Gemeinschaft für 1991 eine Halbierung des heute üblichen Geräuschpegels von Nutzfahrzeugen vor.

Bisher bekannte Hitzeschilde bestehen im wesentlichen aus einem dickeren Blechformteil mit hohem Wärmereflexionsvermögen, vorzugsweise aus Aluminium, auf welchem eine mit einer Schutzfolie versehene wärmeabsorbierende Isolierschicht aufgebracht ist. Die dabei verwendete Isolierschicht besteht in der Regel aus Keramik-, Stein- oder Glaswolle resp. Schäumen. Diese Hitzeschilde sind aber akustisch nicht sehr wirksam. Insbesondere können damit die Aussengeräusche nicht vermindert werden, da die Schallwellen in hohem Mass reflektiert werden. Ein solcher Hitzeschild ist beispielsweise in der DE-U-8700919.6 beschrieben.

Es ist deshalb auch schon vorgeschlagen worden, anstelle des relativ dicken Blechformteils ein Metallgeflecht oder ein Streckmetall zu verwenden und die Isolierschicht beidseitig mit einer Schutzfolie zu belegen. Derartige Hitzeschilde, wie sie beispielsweise in der Offenlegungsschrift DE-A-3821468 beschrieben sind, haben sich in der Praxis jedoch nicht bewährt. Einerseits bilden diese Metallgeflechte oder Streckmetalle an den Verformungsstellen und insbesondere an den Bördelstellen sägezahnartige Strukturen, welche die dünne Schutzfolie verletzten. Andererseits brechen die Befestigungsstellen dieser Hitzeschilde leicht aus und müssen deshalb mit zusätzlich aufgesetzten Befestigungselementen versehen werden. Diese Massnahmen verhindern zwar ein Ausreissen oder Ausbrechen der Hitzeschildhalterungen, aber erschweren und verteuern durch den zusätzlichen Aufwand die Montage dieser Hitzeschilde. Ein weiterer wesentlicher Nachteil dieser Hitzeschilde besteht darin, dass sich die Ränder durch das Bördeln nicht vollständig abdichten lassen und das Isolationsmaterial Feuchtigkeit aufnehmen kann.

Es ist darum die Aufgabe der vorliegenden Erfindung, einen schallabsorbierenden Hitzeschild zu schaffen, welcher die Nachteile der bekannten Vorrichtungen nicht aufweist.

Insbesondere soll ein stabiler Schild geschaffen werden, welcher ausgeprägte wärme- und schallabsorbierende Eigenschaften aufweist, einfach herzustellen ist, eine sichere Montage erlaubt und auch nach längerem Gebrauch keine Ermüdungs- und Verschleisserscheinungen aufweist.

Erfindungsgemäss wird diese Aufgabe mit einem Hitzeschild der eingangs genannten Art gelöst, welcher dadurch gekennzeichnet ist, dass die perforierte Trägerschicht perforationsfreie Teilbereiche aufweist, deren Konturen vorbestimmt sind.

Insbesondere umfassen die perforationsfreien Teilbereiche die Bördelzone eines Hitzeschilds. Damit wird vermieden, dass beim Umbördeln sägezahnartige Ränder gebildet werden, welche die schnelle Montage behindern, zum Brechen neigen und die Schutzfolie verletzen können. Aus gleichen Gründen umfassen die perforationsfreien Teilbereiche auch die Befestigungszonen. Ein besonderer Vorteil besteht dabei darin, dass auf die zusätzlich aufgesetzten Befestigungselemente verzichtet werden kann. Weitere perforationsfreie Teilbereiche umfassen Verformungszonen. Insbesondere sind Knickstellen oder Sicken und Rillen perforationsfrei ausgebildet. Durch die gezielte Auswahl dieser perforationsfreien Teilbereiche erhält der Schild eine erhöhte Eigenstabilität und kann deshalb auch aus dünnerem Material gefertigt werden.

In einer ersten bevorzugten Ausführungsform umfasst der Hitzeschild einen Schutzbelag aus einer porösen Aluminiumfolie. Diese Folie weist vorzugsweise eine Dicke von weniger als 30 µm auf, um Wärmestrahlung reflektieren und Schallwellen wirksam an die Isolierschicht weiterleiten zu können.

In einer zweiten bevorzugten Ausführungsform umfasst der Hitzeschild einen spritzmetallisierten Schutzbelag. Solche Schutzbeläge weisen eine zusammenhängende, offenporige Struktur auf und bieten der Isolierschicht genügend Schutz. Die mit einem solchen Schutzbelag versehenen Hitzeschilde weisen hervorragende akustische Eigenschaften auf.

Weitere bevorzugte Merkmale des erfindungsgemässen Schildes sind in den Ansprüchen angegeben.

Nachfolgend soll die Erfindung anhand eines Ausführungsbeispiels und mit Hilfe der Figuren näher beschrieben werden. Es zeigen:
- Fig. 1: einen Querschnitt durch einen erfindungsgemässen Hitzeschild,
- Fig. 2: eine Aufsicht auf eine für die Herstellung eines erfindungsgemässen Hitzeschilds geeignete Trägerschicht.

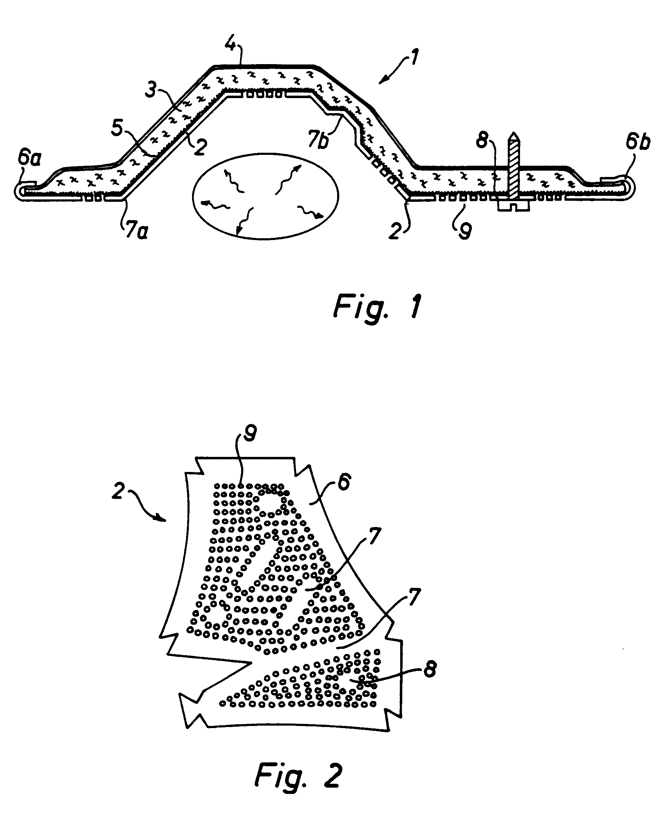

Der in Fig. 1 dargestellte Hitzeschild 1 besteht im wesentlichen aus einer perforierten Trägerschicht 2 mit einem guten Reflexionsvermögen für die Wärmestrahlung und vorzugsweise auch mit gutem Wärmeleitvermögen und einer schallabsorbierenden Wärmedämmschicht 3 aus mineralischen oder keramischen Materialien aus natürlichen oder anorganischen Fasern oder aus Mischungen dieser Substanzen mit Teflon oder anderen handelsüblichen Materialien, welche Wärmedämmschicht 3 mit einem Schutzbelag 4, 5 versehen ist.

Vorzugsweise wird für die Trägerschicht 2 ein Aluminiumblech mit einer Dicke zwischen 0,2 mm und 1,2 mm verwendet. Die Wärmedämmschicht kann beispielsweise aus einem mineralischen Schaum, einem keramischen Faservlies oder aus einer Glasfasermatte bestehen und eine Dicke von 5 mm bis 15 mm aufweisen. Als Schutzbelag kann sowohl ein Aluminiumblech oder eine dünne Aluminiumfolie 4 als auch ein spritzmetallisierter Belag 5 dienen. Vorzugsweise weist die Folie oder der spritzmetallisierte Belag an der der perforierten Trägerschicht zugewandten Seite eine Dicke von weniger als 30 µm auf, während der Schutzbelag auf der der perforierten Trägerschicht abgewandten Seite eine Dicke von 0,05 mm bis 1,2 mm aufweisen kann.

Fig. 1 zeigt deutlich, dass die Trägerschicht 2 nicht in allen Bereichen perforiert ist. Insbesondere sind die Randbereiche 6a, 6b, welche gebördelt sind, frei von Perforationen 9. Ebenso sind die kantigen Verformungszonen 7, wie beispielsweise Knickstellen 7a und Sicken 7b, perforationsfrei ausgebildet. Wesentliche perforationsfreie Teilbereiche sind durch die Befestigungszonen 8 vorbestimmt.

Ein derart ausgestalteter Hitzeschild 1 weist gegenüber den bisher bekannten perforierten Hitzeschilden eine erhöhte Stabilität auf und lässt sich einfach und sicher montieren. Gleichzeitig entstehen durch die Perforationen 9, welche nur in den für die Stabilität des Hitzeschildes nicht relevanten Teilgebieten angebracht sind, vermehrt Turbulenzen in der am Hitzeschild vorbeistreichenden Luft. Die dadurch erhöhte Konvektion der Luft steigert somit auch die wärmedämmende Wirksamkeit des Hitzeschildes. Diese Perforationen 9 bestehen vorzugsweise aus Bohrungen mit 1 mm bis 9 mm Durchmesser und nehmen nicht mehr als 30% der gesamten Fläche der Trägerschicht des Hitzeschildes ein.

Ein einer erprobten Ausführungsform dieses Hitzeschildes beträgt die durch die Bohrungen 9 erzeugte freie Fläche 17% der gesamten Fläche der Trägerschicht. Diese Ausführungsform weist an der der Trägerschicht zugewandten Seite der Isolierschicht 3 einen spritzmetallisierten Schutzbelag 5 auf. Damit wird die durch die Perforationen durchtretende Schallenergie optimal an die Isolationsschicht 3 weitergegeben.

Die Kombination der perforierten Trägerschicht 2 mit dem spritzmetallisierten Schutzbelag 5 erhöht somit die akustische Wirksamkeit des Hitzeschildes 1.

Fig. 2 zeigt eine Aufsicht auf eine für die Herstellung eines erfindungsgemässen Hitzeschildes geeignete und mit Perforationen 9 versehene Trägerschicht 2. Die Kontur dieser Trägerschicht und die Konturen der perforationsfreien Teilbereiche 6, 7 und 8 sind durch den Montageort vorbestimmt. Deutlich ersichtlich ist, wie die Bördelzone 6, Befestigungszonen 8 und Verformungszonen 7 von Perforationen ausgenommen sind.

Bei der erprobten Herstellung eines erfindungsgemässen Hitzeschildes werden in einem ersten Schritt die Trägerschicht sowie Folie und Isolierschicht den vorgegebenen Konturen entlang geschnitten. In einem zweiten Schritt wird die Trägerschicht in den dafür vorgesehenen Teilbereichen perforiert und in eine spezifische Form geprägt. Parallel dazu wird die Isolierschicht mit dem Schutzbelag versehen und in die gleiche Form wie die Trägerschicht gepresst. In einem dritten Schritt werden die beiden Bauteile aufeinandergelegt und miteinander verbunden. Dabei erweist sich die perforationsfreie Bördelzone 6 als besonders vorteilhaft. Einerseits ist das Bördeln eines perforationsfreien Blechteils einfacher und sicherer, andererseits dichtet der umgebördelte Blechteil die Seitenkanten der Isolationsschicht zusätzlich ab. Diese perforationsfreie Bördelzone 6 ermöglicht nicht nur einen guten mechanischen Abschluss, sondern erlaubt es, in die von der Bördelung gebildete Tasche ein zusätzliches Abdichtmaterial, beispielsweise Silikon, einzubringen, um die Feuchtigkeitsaufnahme einer an den Seitenkanten offenen Isolierschicht zu verhindern.

Weitere Ausbildungen des erfindungsgemässen Hitzeschild liegen im gewöhnlichen technischen Handeln des Fachmanns. So können beispielsweise statt eines spritzmetallisierten Schutzbelags, feinporöse Folien verwendet werden oder es können die Bohrungen der Perforation in verschiedenen Bereichen unterschliedliche Grösse aufweisen, um die akustische Wirksamkeit des Hitzeschilds zu optimieren. Es versteht sich von selbst, dass die Dicke und Dichte der Isolationsschicht und insbesondere die Struktur der Trägerschicht so dimensioniert sind, dass die maximale Eigenstabilität bei minimaler Dicke und minimalem Gewicht des gesamten Hitzeschilds erreicht wird. Ebenso liegt es im Bereich des fachmännischen Könnens, das Herstellungsverfahren weiter zu vereinfachen und beispielsweise die Verformung der einzelnen Schichten in einem gemeinsamen Schritt vorzusehen.

Die oben beschriebenen schallabsorbierenden Hitzeschilde können an Motorfahrzeugen, insbesondere Autos und Motorräder, ebensogut verwendet werden, wie an Bau- oder Industriemaschinen, die untolerierbare Schall- und Wärmequellen umfassen.

## Patentansprüche

1. Schallabsorbierender Hitzeschild (1) mit einer perforierten Trägerschicht (2), auf welcher eine schallabsorbierende Wärmedämmschicht (3) befestigt ist, welche Wärmedämmschicht (3) beidseitig mit einem Schutzbelag (4,5) versehen ist, dadurch gekennzeichnet, dass die perforierte Trägerschicht (2) perforationsfreie Teilbereiche (6,6a,6b,7,7a,7b,8) aufweist, deren Konturen vorbestimmt sind.

2. Hitzeschild nach Anspruch 1, dadurch gekennzeichet, dass der Schutzbelag (4,5) mindestens auf der der Trägerschicht (2) zugewandten Seite aus einer Aluminiumfolie besteht.

3. Hitzeschild nach Anspruch 1, dadurch gekennzeichnet, dass der Schutzbelag (4,5) mindestens auf der der Trägerschicht (2) zugewandten Seite ein spritzmetallisierter Belag ist.

4. Hitzeschild nach Anspruch 1 bis 3, dadurch gekennzeichnet, dass die perforationsfreien Teilbereiche Bördelzonen (6,6a,6b) umfassen.

5. Hitzeschild nach Anspruch 1 bis 4, dadurch gekennzeichnet, dass die perforationsfreien Teilbereiche Befestigungszonen (8) umfassen.

6. Hitzeschild nach Anspruch 1 bis 5, dadurch gekennzeichnet, dass die perforationsfreien Teilbereiche Verformungszonen (7), insbesondere Knickstellen- oder Sickenbereiche (7a,7b), umfassen.

7. Verwendung eines schallabsorbierenden Hitzeschildes nach einem der Ansprüche 1 bis 6 in Fahrzeugen, Industrie-oder Baumaschinen.

## Claims

1. Sound absorbing heat shield (1), comprising a perforated support layer (2), on which a sound-absorbing, thermally insulating layer (3) is fixed, which thermally insulating layer (3) is provided on both faces with a protective covering (4, 5), characterized in that the perforated support layer (2) possesses perforation-free partial zones (6, 6a, 6b, 7, 7a, 7b, 8), the contours of which are predetermined.

2. Heat shield according to Claim 1, characterized in that the protective covering (4, 5), at least on the side towards the support layer (2), consists of an aluminium foil.

3. Heat shield according to Claim 1, characterized in that the protective covering (4, 5), at least on the side towards the support layer (2), is a sprayed metal coating.

4. Heat shield according to Claims 1 to 3, characterized in that the perforation-free partial zones include flanged zones (6, 6a, 6b).

5. Heat shield according to Claims 1 to 4, characterized in that the perforation-free partial zones include fixing zones (8).

6. Heat shield according to Claims 1 to 5, characterized in that the perforation-free partial zones include deformation zones (7), especially kinked or beaded zones (7a, 7b).

7. Use of a sound absorbing heat shield according to one of Claims 1 to 6 in vehicles, industrial machines or construction plant.

## Revendications

1. Bouclier thermique (1) absorbant le bruit, avec une couche support (2) perforée sur laquelle est fixée une couche d'isolation thermique (3) qui absorbe le bruit, laquelle couche d'isolation thermique (3) est pourvue sur ses deux faces d'un revêtement de protection (4, 5), caractérisé en ce que la couche support (2) perforée présente des zones partielles (6, 6a, 6b, 7, 7a, 7b, 8) sans perforation (*NdT: zones sans perforation qui* *s'étendent sur une partie de la surface de la couche* *support, dénommées ici zones partielles sans* *perforation),* dont les contours sont prédéterminés.

2. Bouclier thermique selon la revendication 1, caractérisé en ce que le revêtement de protection (4, 5) est constitué au moins sur la face en regard de la couche support (2) d'une feuille en aluminium.

3. Bouclier thermique selon la revendication 1, caractérisé en ce que le revêtement de protection (4, 5) est, au moins sur la face en regard de la couche support (2), un revêtement métallisé par un procédé par injection.

4. Bouclier thermique selon la revendication 1 à 3, caractérisé en ce que les zones partielles sans perforation comprennent les zones à bords rabattus (6, 6a, 6b).

5. Bouclier thermique selon la revendication 1 à 4, caractérisé en ce que les zones partielles sans perforation comprennent les zones de fixation (8).

6. Bouclier thermique selon la revendication 1 à 5, caractérisé en ce que les zones partielles sans perforation comprennent les zones de déformation (7), en particulier les zones de pliage ou les moulures (7a, 7b).

7. Utilisation d'un bouclier thermique selon l'une des revendications 1 à 6 sur des véhicules, des machines industrielles ou des engins de chantier.
